(19) Europäisches Patentamt
European Patent Office
Office européen des brevets

(11) **EP 4 542 674 A1**

(12) **EUROPEAN PATENT APPLICATION**
published in accordance with Art. 153(4) EPC

(43) Date of publication:
**23.04.2025 Bulletin 2025/17**

(21) Application number: **23912680.8**

(22) Date of filing: **13.12.2023**

(51) International Patent Classification (IPC):
$H01M\ 4/134^{(2010.01)}$     $H01M\ 4/38^{(2006.01)}$
$H01M\ 4/48^{(2010.01)}$     $H01M\ 4/36^{(2006.01)}$
$H01M\ 4/587^{(2010.01)}$     $H01M\ 4/62^{(2006.01)}$
$H01M\ 4/131^{(2010.01)}$     $H01M\ 4/133^{(2010.01)}$
$H01M\ 10/052^{(2010.01)}$     $H01M\ 4/02^{(2006.01)}$

(52) Cooperative Patent Classification (CPC):
H01M 4/02; H01M 4/131; H01M 4/133;
H01M 4/134; H01M 4/36; H01M 4/38; H01M 4/48;
H01M 4/587; H01M 4/62; H01M 10/052;
Y02E 60/10

(86) International application number:
**PCT/KR2023/020496**

(87) International publication number:
**WO 2024/144005 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022 KR 20220184220**

(71) Applicant: **LG Energy Solution, Ltd.
Seoul 07335 (KR)**

(72) Inventors:
• **KIM, Young Jae
Daejeon 34122 (KR)**
• **LEE, Jaewook
Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE FOR LITHIUM SECONDARY BATTERY, AND LITHIUM SECONDARY BATTERY COMPRISING NEGATIVE ELECTRODE**

(57) The present application relates to a negative electrode composition, a negative electrode for a lithium secondary battery including the same, and a lithium secondary battery including a negative electrode.

[Figure 1]

EP 4 542 674 A1

## Description

[Technical Field]

This application claims priority to and the benefit of Korean Patent Application No. 10-2022-0184220 filed in the Korean Intellectual Property Office on December 26, 2022, the entire contents of which are incorporated herein by reference.

The present application relates to a negative electrode for a lithium secondary battery, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.

In particular, according to the demand for high-density energy batteries in recent years, researches are being actively conducted on a method for increasing a capacity by using a silicon-based compound such as Si/C or SiOx having a capacity greater than, by a factor of 10 or more, graphite-based materials, as a negative electrode active material. When compared with graphite that is typically used, however, the silicon-based compound that is a high-capacity material has a large capacity but undergoes rapid volume expansion during a charging process, thereby disconnecting a conductive path to degrade battery characteristics.

Accordingly, in order to address a problem occurring when the silicon-based compound is used as the negative electrode active material, methods of suppressing the volume expansion itself such as a method of controlling a driving potential, a method of additionally further coating a thin film on an active material layer and a method of controlling a particle diameter of a silicon-based compound, or various methods for preventing a conductive path from being disconnected have been discussed. However, the above methods may rather deteriorate the performance of a battery, and thus, the application thereof is limited, so that there is still a limitation in commercializing the manufacture of a battery including a negative electrode having a high content of a silicon-based compound.

In addition, in the case of carbon-based negative electrodes such as conventional graphite, regarding the active material, the range of electric conductivity was not significant because graphite itself is a material with high conductivity. However, when a silicon-based active material is used to enhance capacity characteristics, the silicon-based active material is a non-conductive material, so conductivity should be imparted by adding a negative electrode conductive material or subjecting the silicon-based active material to a surface treatment.

Therefore, it is necessary to conduct research on a negative electrode composition capable of preventing volume expansion, damage to a conductive path, and surface breakage, due to the charging and discharging in the process of manufacturing a silicon-based negative electrode for maximizing capacity characteristics, and research on a negative electrode capable of maintaining electric conductivity in a silicon-based negative electrode.

Prior Art Document

(Patent Literature 1) Japanese Patent Application Publication No. 2009-080971

[Detailed Description of the Invention]

[Technical Problem]

For negative electrodes using silicon-based active materials, it was found that the negative electrode electric conductivity should be maintained within a certain range in maintaining the conductive network of the electrode so that the performance of the silicon-based active material, which is a non-conductive material, can be maintained. In other words, it was found that a certain electric conductivity can be maintained when dispersibility is improved along with a specific combination of a silicon-based active material, a conductive material, and a binder, which are included in the silicon-based negative electrode.

Accordingly, the present application attempts to provide a negative electrode for a lithium secondary battery, and a lithium secondary battery including a negative electrode.

[Technical Solution]

An exemplary embodiment of the present specification provides a negative electrode for a lithium secondary battery including a negative electrode current collector layer; and a negative electrode active material layer including a negative electrode active material layer composition provided on one surface or both surfaces of the negative electrode current collector layer, wherein the negative electrode active material layer composition includes a silicon-based active material, wherein the negative electrode active material layer has a porosity ranging from 10% to 50%, and wherein an electric conductivity of the negative electrode for a lithium secondary battery satisfies a range of 1 S/cm$^2$ or greater and 3,000 S/cm$^2$ or less.

Another exemplary embodiment provides a lithium secondary battery including: a positive electrode; the negative electrode for a lithium secondary battery according to the present application; a separator provided between the positive electrode and the negative electrode; and an electrolyte.

[Advantageous Effects]

The negative electrode for a lithium secondary battery according to the exemplary embodiment of the present invention has a derived range of electric conductivity within which the performance of the silicon-based active material that is a non-conductive material can be maintained when a silicon-based active material, which is a high-capacity material, is used in order to manufacture a high-capacity battery.

That is, in the conventional carbon-based negative electrode, the electric conductivity itself of the negative electrode is not an important factor because graphite itself has high conductivity. However, in the negative electrode for which a silicon-based active material is used in order to achieve rapid charging and high energy density, silicon, a non-conductive material, is used as described above. In this case, the rolling porosity of the negative electrode itself and the degree of dispersion of the conductive material are very important. According to the present application, the electric conductivity of the negative electrode is controlled to a range of 1 S/cm$^2$ or greater and 3,000 S/cm$^2$ or less by adjusting the corresponding factors, so that the performance of the silicon-based active material can be ensured and maintained.

[Brief Description of Drawings]

FIG. 1 is a view showing a stack structure of a negative electrode for a lithium secondary battery according to an exemplary embodiment of the present application.
FIG. 2 is a view showing a stack structure of a negative electrode for a lithium secondary battery according to an exemplary embodiment of the present application.
FIG. 3 is a view showing a stack structure of a lithium secondary battery according to an exemplary embodiment of the present application.

<Explanation of Reference Numerals and Symbols>

10:     negative electrode current collector layer
20:     negative electrode active material layer
30:     separator
40:     positive electrode active material layer
50:     positive electrode current collector layer
100:    negative electrode for lithium secondary battery
200:    positive electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode for a lithium secondary battery including a negative electrode current collector layer; and a negative electrode active material layer including a negative electrode active material layer composition provided on one surface or both surfaces of the negative electrode current collector layer, wherein the negative electrode active material layer composition includes a silicon-based active material, wherein the negative electrode active material layer has a porosity ranging from 10% to 50%, and wherein an electric conductivity of the negative electrode for a lithium secondary battery satisfies a range of 1 S/cm$^2$ or greater and 3,000 S/cm$^2$ or less.

The electric conductivity of the negative electrode for a lithium secondary battery according to the present application may satisfy a range of 1 S/cm$^2$ or greater and 3,000 S/cm$^2$ or less, preferably 10 S/cm$^2$ or greater and 2,900 S/cm$^2$ or less, and more preferably 100 S/cm$^2$ or greater and 2,800 S/cm$^2$ or less.

The negative electrode for a lithium secondary battery according to the exemplary embodiment of the present invention has a derived range of electric conductivity within which the performance of the silicon-based active material that is a non-conductive material can be maintained when a silicon-based active material, which is a high-capacity material, is used in order to manufacture a high-capacity battery. In this case, the range of electric conductivity described above is the most important factor when using a silicon-based negative electrode, and was derived according to the porosity after rolling of a negative electrode for a lithium secondary battery and the degree of dispersion of the conductive material.

In an exemplary embodiment of the present application, there is provided the negative electrode for a lithium secondary battery in which the silicon-based active material may include one or more selected from the group consisting of SiOx (x=0), SiOx (0<x<2), SiC, and a Si alloy.

The silicon-based active material may be SiOx, Si/C, or Si. SiOx may include a compound represented by SiOx ($0 \leq x < 2$). Since $SiO_2$ does not react with lithium ions and cannot store lithium, x is preferably within the above range. The silicon-based active material may be Si/C composed of a composite of Si and C, or Si. In addition, two or more of the above silicon-based active materials may be mixed and used. The negative electrode active material may further include a carbon-based active material together with the silicon-based active material described above. The carbon-based active material can contribute to improving cycle characteristics or battery lifespan performance of the negative electrode or secondary battery of the present invention.

In general, a silicon-based active material is known to have a capacity that is 10 times higher than that of a carbon-based active material, and accordingly, when the silicon-based active material is applied to a negative electrode, it is expected that an electrode having a high level of energy density can be implemented even with a thin thickness.

In an exemplary embodiment of the present application, the silicon-based active material may include one or more selected from the group consisting of $SiOx$ (x=0) and $SiOx$ (0<x<2), and may include the $SiOx$ (x=0) in an amount of 70 parts by weight or more based on 100 parts by weight of the silicon-based active material.

In another exemplary embodiment, the silicon-based active material may include $SiOx$ (x=0) in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the silicon-based active material.

The silicon-based active material according to the present application includes 70 parts by weight or more of $SiOx$ (x=0) based on 100 parts by weight of the silicon-based active material. When compared with a silicon-based active material in which a $SiOx$ (0<x<2)-based active material is used as a main material, the theoretical capacity thereof is much lower than that of the silicon-based active material of the present application. That is, if a $SiOx$ (0<x<2)-based active material is used, even when the active material itself is treated in any way, it is not possible to implement conditions equivalent to the charging and discharging capacities of the silicon-based active material of the present invention.

In an exemplary embodiment of the present application, pure silicon (Si) may be used as the silicon-based active material. The use of pure silicon (Si) as the silicon-based active material may mean that, based on 100 parts by weight of the total silicon-based active material as described above, pure Si particles ($SiOx$ (x=0)) not bonded to other particles or elements are included within the above range.

The capacity of the silicon-based active material is significantly higher than that of a graphite-based active material that is typically used, so that there have been more attempts to apply the same. However, the volume expansion rate of the silicon-based active material during charging/discharging is high, so that only a small amount thereof is mixed and used with a graphite-based active material.

Therefore, the present invention has such features that while using a high content of silicon-based active material as the negative electrode active material for improving the capacity performance, the binder of the specific condition is used in order to solve the problems of maintaining the conductive path and the combination of the conductive material, the binder, and the active material with respect to the volume expansion described above.

Note that an average particle diameter (D50) of the silicon-based active material of the present invention may be 5 μm to 10 μm, specifically 5.5 μm to 8 μm, and more specifically 6 μm to 7 μm. When the average particle diameter is within the above range, a specific surface area of the particles is within a suitable range, so that the viscosity of the negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, resulting in an increase in the capacity retention rate. Note that, when the average particle diameter satisfies the above range, excessively large silicon particles are excluded, so that a surface of the negative electrode is formed smooth. Accordingly, a current density nonuniformity phenomenon during charging and discharging can be prevented.

In an exemplary embodiment of the present application, the silicon-based active material generally has a characteristic BET surface area. The BET surface area of the silicon-based active material is preferably 0.1 m$^2$/g to 150.0 m$^2$/g, more preferably 0.1 m$^2$/g to 100.0 m$^2$/g, particularly preferably 0.2 m$^2$/g to 80.0 m$^2$/g, and most preferably 0.2 m$^2$/g to 18.0 m$^2$/g. The BET surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or fragment-shaped particles. Alternatively, but less preferably, the silicon particles may also have a fiber structure or be present in the form of a silicon-containing film or coating.

In an exemplary embodiment of the present application, the silicon-based active material may be included in an amount of 60 parts by weight or more based on 100 parts by weight of the negative electrode active material layer composition.

In another exemplary embodiment, based on 100 parts by weight of the negative electrode active material layer composition, 60 parts by weight or more, preferably 65 parts by weight or more, and more preferably 70 parts by weight or more, and 95 parts by weight or less, preferably 90 parts by weight or less, and more preferably 85 parts by weight or less of the silicon-based active material may be included.

The negative electrode composition according to the present application uses the specific conductive material and binder capable of controlling the volume expansion rate during charging and discharging even when the silicon-based active material having a significantly high capacity is used within the above range. Accordingly, even when the silicon-based active material is within the above range, the negative electrode composition does not degrade the performance of the negative electrode and has excellent output characteristics in charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the circularity is determined by Formula 1-1 below, in which A is an area and P is a boundary line.

$$[\text{Formula 1-1}]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, in the case of a silicon-based compound, even when the characteristics of the silicon-based active material itself are adjusted as described above according to the present application, the volume may rapidly expand during the charging/discharging, thereby causing some problems of damaging the conductive path formed in the negative electrode active material layer.

Therefore, in an exemplary embodiment of the present application, there is provided the negative electrode for a lithium secondary battery in which the negative electrode active material layer composition further includes a negative electrode conductive material and a negative electrode binder and the negative electrode conductive material is included in an amount of 1 part by weight or more and 40 parts by weight or less based on 100 parts by weight of the negative electrode active material layer composition.

In an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a point-like or spherical conductive material that may be used for improving conductivity of the negative electrode, and has conductivity without causing a chemical change. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less.

In an exemplary embodiment of the present application, a content of the functional group (volatile matter) of the point-like conductive material may satisfy a range of 0.01% or more and 1% or less, preferably 0.01% or more and 0.3% or less, and more preferably 0.01% or more and 0.1% or less.

In particular, when the content of the functional group of the point-like conductive material satisfies the above range, a functional group is present on a surface of the point-like conductive material, so that the point-like conductive material can be smoothly dispersed in a solvent when water is used as the solvent. In particular, in the present invention, as the silicon particle and the specific binder are used, the content of the functional group of the point-like conductive material can be lowered, which exhibits an excellent effect on improving dispersibility.

In an exemplary embodiment of the present application, the content of the functional group can be adjusted according to a degree of heat treatment of the point-like conductive material.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the negative electrode conductive material may include a planar conductive material.

The planar conductive material improves conductivity by increasing surface contact between silicon particles in the negative electrode, and at the same time, can serve to suppress disconnection of the conductive path due to the volume expansion. The planar conductive material may be expressed as a plate-like conductive material or a bulk-type conductive material.

In an exemplary embodiment of the present application, the planar conductive material may be provided in the form of binding to the surfaces of the silicon-based particles. Specifically, the planar conductive material may be provided in such a form that an -OH group or -O on the surface of the silicon-based particle binds to a hydrophilic group of the planar conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, an average particle diameter (D50) of the planar conductive material may be 2 $\mu$m to 7 $\mu$m, specifically 3 $\mu$m to 6 $\mu$m, and more specifically 3.5 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 $\mu$m or greater and 2.0 $\mu$m or less, D50 of 2.5 $\mu$m or greater and 3.5 $\mu$m or less, and D90 of 6.5 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 1 m$^2$/g or greater.

In another exemplary embodiment, the planar conductive material may have a BET specific surface area of 1 m$^2$/g or greater and 500 m$^2$/g or less, preferably 5 m$^2$/g or greater and 300 m$^2$/g or less, and more preferably 5 m$^2$/g or greater and 250 m$^2$/g or less.

For the planar conductive material of the present application, a planar conductive material with a high specific surface area or a planar conductive material with a low specific surface area may be used.

In another exemplary embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may satisfy a range of 1 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term "bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may include a linear conductive material, and the linear conductive material may include an SWCNT, and an MWCNT. Illustratively, the linear conductive material may be a single-walled carbon nanotube (SWCNT) with a large BET specific surface area, a linear form, a very small diameter, and a very long length. The linear conductive material such as SWCNT cannot be stretched through dispersion and has a strong ability to return to its original form when dried. As a result, the linear conductive material such as SWCNT has a strong ability to return to its original form when dried, so it generally is present in a form of wrapping or connecting a negative electrode active material or secondary agglomerate. The bonding method can be adsorption by van der Waals force.

In an exemplary embodiment of the present application, there is provided the negative electrode composition in which the negative electrode conductive material is included in an amount of 1 part by weight or more and 40 parts by weight or less based on 100 parts by weight of the negative electrode composition.

In another exemplary embodiment, the negative electrode conductive material may be included in an amount of 1 part by weight or more and 40 parts by weight or less, preferably 3 parts by weight or more and 30 parts by weight or less, and more preferably 3 parts by weight or more and 25 parts by weight or less based on 100 parts by weight of the negative electrode composition.

In an exemplary embodiment of the present application, there is provided the negative electrode for a lithium secondary battery in which the negative electrode conductive material is composed of a planar conductive material and a linear conductive material.

In the exemplary embodiment of the present application, the negative electrode conductive material may include 80 parts by weight or more and 99.9 parts by weight or less of the planar conductive material, and 0.1 part by weight or more and 20 parts by weight or less of the linear conductive material based on 100 parts by weight of the negative electrode conductive material.

In another exemplary embodiment, the negative electrode conductive material may include 80 parts by weight or more and 99.9 parts by weight or less, preferably 85 parts by weight or more and 99.9 parts by weight or less, and more preferably 95 parts by weight or more and 98 parts by weight or less of the planar conductive material based on 100 parts by weight of the negative electrode conductive material.

In another exemplary embodiment, the negative electrode conductive material may include 0.1 part by weight or more and 20 parts by weight or less, preferably 0.1 part by weight or more and 15 parts by weight or less, and more preferably 1 part by weight or more and 5 parts by weight or less of the linear conductive material based on 100 parts by weight of the negative electrode conductive material.

In an exemplary embodiment of the present application, the negative electrode conductive material includes the planar conductive material and the linear conductive material and satisfies the composition and ratio described above, respectively, so the life characteristics of an existing lithium secondary battery are not significantly affected, and particularly, the number of points where charging and discharging are possible increases when the planar conductive material and the linear conductive material are included, so that output characteristics are excellent at a high C-rate and an amount of gas generation at high temperatures is reduced.

In an exemplary embodiment of the present application, there is provided the negative electrode for a lithium secondary battery in which the negative electrode conductive material includes a linear conductive material alone and the linear conductive material is included in an amount of 5 parts by weight or less based on 100 parts by weight of the negative electrode conductive material.

In another exemplary embodiment, the negative electrode conductive material may include a linear conductive material alone, and the linear conductive material may be included in an amount of 5 parts by weight or less, and preferably 4 parts by weight or less, and 0.1 part by weight or more, and preferably 0.5 part by weight or more based on 100 parts by weight of the negative electrode conductive material.

In an exemplary embodiment of the present application, there is provided the negative electrode for a lithium secondary battery in which the negative electrode conductive material includes a negative electrode conductive material pre-dispersion solution, and the negative electrode conductive material pre-dispersion solution has a viscosity of 2,000 cP or higher and 10,000 cP or less.

That is, the fact that the negative electrode conductive material includes a negative electrode conductive material pre-dispersion solution means that the negative electrode conductive material is not included in the negative electrode active material layer composition as it is, but is included in a pre-dispersed state, and when the viscosity of the negative electrode conductive material pre-dispersion solution in a pre-dispersed state satisfies 2,000 cP or higher and 10,000 cP or less and a rolling porosity described below is satisfied, the negative electrode conductivity according to the present application can be satisfied.

The negative electrode conductive material according to the present application has a completely different configuration from that of a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the planar conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure during volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, there is provided the negative electrode for a lithium secondary battery in which the negative electrode binder includes an aqueous binder and the negative electrode binder is included in an amount of 5 parts by weight or more and 30 parts by weight or less based on 100 parts by weight of the negative electrode active material layer composition.

In another exemplary embodiment, the negative electrode binder may be included in an amount of 5 parts by weight or more and 30 parts by weight or less, preferably 7 parts by weight or more and 15 parts by weight or less, and more preferably 9 parts by weight or more and 12 parts by weight or less based on 100 parts by weight of the negative electrode active material layer composition.

In an exemplary embodiment of the present application, the negative electrode binder may be included in an amount of 3 parts by weight or more and 10 parts by weight or less based on 100 parts by weight of the silicon-based active material.

In another exemplary embodiment, the content of the negative electrode binder may be 3 parts by weight or more and 10 parts by weight or less, preferably 3.5 parts by weight or more and 9.5 parts by weight or less, and more preferably 4 parts by weight or more and 9 parts by weight or less based on 100 parts by weight of the silicon-based active material.

In the negative electrode for a lithium secondary battery according to the present application, the silicon-based active material is used within the range of the parts by weight described above in order to maximize capacity characteristics, and the volume expansion during charging and discharging is larger, as compared with a case in which a conventional carbon-based active material is used as a main active material. Accordingly, the negative electrode includes the negative electrode binder in the content described above, and thus, has a feature of efficiently controlling the volume expansion due to charging and discharging of the silicon-based active material having high rigidity.

In particular, the negative electrode for a lithium secondary battery according to the present application satisfies a certain electric conductivity, and the electric conductivity can be adjusted by a negative electrode conductive material and a negative electrode binder. The negative electrode conductive material is a conductive material, and the silicon-based active material and the negative electrode binder are non-conductive materials, so the above-mentioned electric conductivity can be satisfied by controlling a mixed state by adjusting the ratio and the degree of dispersion in the electrode in which they are mixed. As the electric conductivity is satisfied, the performance of the silicon-based active material can be maintained.

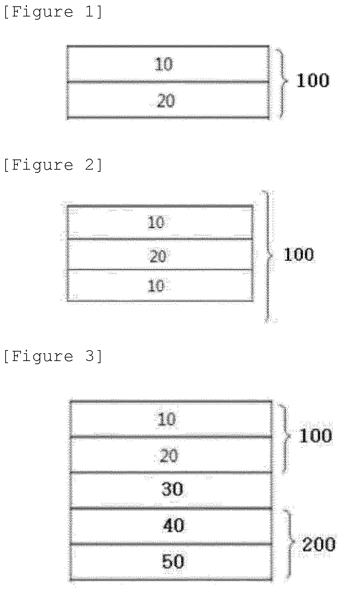

FIG. 1 is a view showing a stack structure of a negative electrode for a lithium secondary battery according to an exemplary embodiment of the present application. Specifically, a negative electrode 100 for a lithium secondary battery including a negative electrode active material layer 20 on one surface of a negative electrode current collector layer 10 can be seen.

FIG. 2 shows a stack structure of a negative electrode for a lithium secondary battery according to another exemplary embodiment of the present application. Specifically, a negative electrode 100 for a lithium secondary battery including negative electrode active material layers 20 on both surfaces of a negative electrode current collector layer 10 can be seen.

In the present application, there are a type in which one surface of a negative electrode current collector layer is coated with a negative electrode active material layer (refer to FIG. 1) and a type in which both surfaces of a negative electrode current collector layer are coated with negative electrode active material layers (refer to FIG. 2). In this case, the composition of the negative electrode active material layer coated on both surfaces may be the same or different.

In an exemplary embodiment of the present application, when negative electrode active material layers are coated on both surfaces, the negative electrode active material layer including the negative electrode composition according to the present application can be used without limitation as long as it is coated on any one of the two surfaces, and a silicon-based negative electrode active material or a carbon-based negative electrode active material, which can be generally included, may be included on the other surface.

In an exemplary embodiment of the present application, the negative electrode slurry including the negative electrode active material layer composition may be coated on one surface or both surfaces of the current collector to form a negative electrode for a lithium secondary battery.

In an exemplary embodiment of the present application, the negative electrode slurry may include a negative electrode active material layer composition and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode active material layer composition included in the negative electrode slurry, and may mean a content of the negative electrode active material layer composition based on 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

In an exemplary embodiment of the present application, the negative electrode current collector layer generally has a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, there is provided the negative electrode for a lithium secondary battery in which a thickness of the negative electrode current collector layer is 1 $\mu$m or greater and 100 $\mu$m or less and a thickness of the negative electrode active material layer is 20 $\mu$m or greater and 500 $\mu$m or less.

However, the thickness may be variously modified depending on a type and a use of negative electrode used, and is not limited thereto.

In an exemplary embodiment of the present application, a porosity of the negative electrode active material layer may satisfy a range of 10% to 50%.

In another exemplary embodiment, the porosity of the negative electrode active material layer may satisfy a range of 10% or greater and 40% or less, preferably 20% or greater and 40% or less, and more preferably 30% or greater and 40% or less.

The porosity varies depending on compositions and contents of the silicon-based active material, the conductive material, and the binder included in the negative electrode active material layer, and in particular, satisfies the range described above when the silicon-based active material and the conductive material are included in the specific compositions and contents according to the present application, so that the electrode has electric conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 3 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stack structure with a separator 30 interposed therebetween. In addition, the negative electrode active material layer 20 may be formed on both surfaces of the negative electrode current collector layer 10. Additionally, the positive electrode active material layer 40 may be formed on both surfaces of the positive electrode current collector layer 50.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 $\mu$m to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**<Example 1>**

Si (average particle diameter (D50): 3.5 $\mu$m) serving as a silicon-based active material, a first conductive material, a second conductive material, and polyacrylamide serving as a binder were added to distilled water serving as a solvent for formation of a negative electrode slurry at a weight ratio of 88:2.6:0.4:9 to prepare a negative electrode slurry (solid concentration: 25 wt%).

The first conductive material was SWCNT and had a BET specific surface area of about 1000 to 1500 $m^2/g$ and the aspect ratio of 10000 or greater (specific surface area: 58 $m^2/g$, diameter: 37 nm, volatile matter: 0.01%), and the second conductive material was MWCNT.

In this case, the first and second conductive materials formed a negative electrode conductive material pre-dispersion solution so that the solid content was 15% in water, which is a dispersion medium, and the negative electrode pre-dispersion solution was dispersed through milling equipment using a homo mixer to prepare a negative electrode conductive material pre-dispersion solution with a viscosity of 6700 cP.

As a mixing method, the negative electrode conductive material pre-dispersion solution, the binder and water were dispersed at 2500 rpm for 30 minutes by using a homo mixer, the active material was added thereto, and the resultant mixture was dispersed at 2500 rpm for 30 minutes to fabricate a slurry.

The negative electrode slurry was coated on both surfaces of a copper current collector (thickness: 8 $\mu$m) serving

as a negative electrode current collector with a loading amount of 85 mg/25 cm$^2$, which was then roll-pressed and dried in a vacuum oven at 130°C for 10 hours to form a negative electrode active material layer (thickness: 33 $\mu$m), whereby a negative electrode was prepared (thickness of negative electrode: 41 $\mu$m). In this case, the porosity and electric conductivity of the negative electrode active material layer are as shown in Table 1 below.

[Table 1]

| | Electric conductivity (S/cm$^2$) | Porosity (%) of negative electrode active material layer | Viscosity (cP) of negative electrode conductive material pre-dispersion solution |
|---|---|---|---|
| Example 1 | 145.8 | 29.7 | 6700 |
| Example 2 | 288.2 | 26.3 | 6700 |
| Example 3 | 2703.4 | 28.4 | 9850 |
| Example 4 | 61.1 | 37.1 | 6900 |
| Comparative Example 1 | 0.5 | 43 | 6700 |
| Comparative Example 2 | 4605 | 40.1 | 6700 |

**<Preparation of Secondary Battery>**

A positive electrode slurry (solid concentration: 78 wt%) was prepared by adding LiNi$_{0.6}$Co$_{0.2}$Mn$_{0.2}$O$_2$ (average particle diameter (D50): 15 $\mu$m) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

The positive electrode slurry was coated on both surfaces of an aluminum current collector (thickness: 12 $\mu$m) serving as a positive electrode current collector with a loading amount of 537 mg/25 cm$^2$, which was then roll-pressed and dried in a vacuum oven at 130°C for 10 hours to form a positive electrode active material layer (thickness: 65 $\mu$m), whereby a positive electrode was prepared (thickness of positive electrode: 77 $\mu$m, porosity: 26%).

A secondary battery of Example 1 was prepared by interposing a polyethylene separator between the positive electrode and the negative electrode of Example 1 and injecting an electrolyte.

The electrolyte was obtained by adding vinylene carbonate to an organic solvent, in which fluoroethylene carbonate (FEC) and diethyl carbonate (DEC) were mixed at a volume ratio of 30:70, in an amount of 3 wt% based on a total weight of the electrolyte and adding LiPF$_6$ as a lithium salt to a concentration of 1M.

Secondary batteries were each prepared in the same manner as in the above method, except that the negative electrodes of the Examples and the Comparative Examples were used.

**Experimental Example 1: Evaluation of Mono-Cell Life**

For the secondary batteries prepared in the Examples and the Comparative Example, the life and the capacity retention rate were evaluated using an electrochemical charging and discharging device. The secondary batteries were subjected to charging and discharging under conditions of 1) a first cycle of charging (0.33C CC/CV charge, 4.2V 0.05C cut) and discharging (0.33C CC discharge, 3.0V cut), and 2) a second cycle of charging (1.0C CC/CV charge, 4.2V 0.05C cut) and discharging (0.5C CC discharge, 3.0V cut).

The capacity retention rate at an Nth cycle was evaluated by a following formula. The results are shown in Table 2 below.

capacity retention rate (%)={ (discharge capacity in the Nth cycle)/(discharge capacity in the first cycle) }×100

[Table 2]

| | Capacity retention rate (based on @200cycle) |
|---|---|
| Example 1 | 65% |
| Example 2 | 64% |
| Example 3 | 60% |

(continued)

|  | Capacity retention rate (based on @200cycle) |
|---|---|
| Example 4 | 61% |
| Comparative Example 1 | 53% |
| Comparative Example 2 | 45% |

As can be seen in Tables 1 and 2 above, it could be confirmed that the batteries including the negative electrodes of Examples 1 to 4 according to the present application satisfy the porosity and the degree of dispersion of the conductive material to control the electric conductivity to the range of the present application, leading to features of ensuring and maintaining the performance of the silicon-based active material.

In the case of Comparative Example 1, the range of electric conductivity is below the range according to the present application, and in the case of Comparative Example 2, the range is above the range according to the present application. Likewise, the porosity and the degree of dispersion of the conductive material were adjusted and formed as described above, and in this case, it could be confirmed that the capacity retention rates were reduced as can be seen in Table 2. Specifically, it could be confirmed that in the case of Comparative Example 1, the electric conductivity was low and it was not easy to form a conductive network, resulting in poor performance, and in the case of Comparative Example 2, the range of electric conductivity was rather high, which resulted in problems in capacity and life.

## Claims

1. A negative electrode for a lithium secondary battery comprising:

   a negative electrode current collector layer; and
   a negative electrode active material layer comprising a negative electrode active material layer composition provided on one surface or both surfaces of the negative electrode current collector layer,
   wherein the negative electrode active material layer composition comprises a silicon-based active material,
   wherein the negative electrode active material layer has a porosity ranging from 10% to 50%, and
   wherein an electric conductivity of the negative electrode for a lithium secondary battery satisfies a range of 1 S/cm$^2$ or greater and 3,000 S/cm$^2$ or less.

2. The negative electrode for a lithium secondary battery of claim 1, wherein the silicon-based active material comprises one or more selected from the group consisting of SiOx (x=0), SiOx (0<x<2), SiC, and a Si alloy.

3. The negative electrode for a lithium secondary battery of claim 1, wherein the silicon-based active material comprises one or more selected from the group consisting of SiOx (x=0) and SiOx (0<x<2), and comprises the SiOx (x=0) in an amount of 70 parts by weight or more based on 100 parts by weight of the silicon-based active material.

4. The negative electrode for a lithium secondary battery of claim 1, wherein the silicon-based active material is included in an amount of 60 parts by weight or more based on 100 parts by weight of the negative electrode active material layer composition.

5. The negative electrode for a lithium secondary battery of claim 1, wherein the negative electrode active material layer composition further comprises a negative electrode conductive material and a negative electrode binder, and wherein the negative electrode conductive material is included in an amount of 1 part by weight or more and 40 parts by weight or less based on 100 parts by weight of the negative electrode active material layer composition.

6. The negative electrode for a lithium secondary battery of claim 5, wherein the negative electrode conductive material comprises a linear conductive material, and wherein the linear conductive material is included in an amount of and 5 parts by weight or less based on 100 parts by weight of the negative electrode conductive material.

7. The negative electrode for a lithium secondary battery of claim 5, wherein the negative electrode conductive material is composed of a planar conductive material and a linear conductive material.

8. The negative electrode for a lithium secondary battery of claim 7, wherein the negative electrode conductive material comprises the planar conductive material in an amount of 80 parts by weight or more and 99.9 parts by weight or less and the linear conductive material in an amount of 0.1 part by weight or more and 20 parts by weight or less based on 100 parts by weight of the negative electrode conductive material.

9. The negative electrode for a lithium secondary battery of claim 5, wherein the negative electrode conductive material comprises a negative electrode conductive material pre-dispersion solution, and
wherein a viscosity of the negative electrode conductive material pre-dispersion solution is 2,000 cP or higher and 10,000 cP or less.

10. The negative electrode for a lithium secondary battery of claim 5, wherein the negative electrode binder is included in an amount of 5 parts by weight or more and 30 parts by weight or less based on 100 parts by weight of the negative electrode active material layer composition.

11. The negative electrode for a lithium secondary battery of claim 1, wherein the negative electrode current collector layer has a thickness of 1 $\mu$m or greater and 100 $\mu$m or less, and
wherein the negative electrode active material layer has a thickness of 20 $\mu$m or greater and 500 $\mu$m or less.

12. A lithium secondary battery comprising:

a positive electrode;
the negative electrode for a lithium secondary battery of any one of claims 1 to 11;
a separator provided between the positive electrode and the negative electrode; and
an electrolyte.

[Figure 1]

[Figure 2]

[Figure 3]

| INTERNATIONAL SEARCH REPORT | International application No. |
|---|---|
| | **PCT/KR2023/020496** |

**A. CLASSIFICATION OF SUBJECT MATTER**

**H01M 4/134**(2010.01)i; **H01M 4/38**(2006.01)i; **H01M 4/48**(2010.01)i; **H01M 4/36**(2006.01)i; **H01M 4/587**(2010.01)i; **H01M 4/62**(2006.01)i; **H01M 4/131**(2010.01)i; **H01M 4/133**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/134(2010.01); H01M 10/052(2010.01); H01M 4/1395(2010.01); H01M 4/36(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 음극(anode), 집전체(current collector), 실리콘계 활물질(silicon-based active material), 공극률(porosity), 전기전도도(electrical conductivity)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0089568 A (LG CHEM, LTD.) 27 July 2020 (2020-07-27)<br>See claims 1-3 and 9-10; and paragraphs [0053]-[0054], [0091] and [0115]-[0117]. | 1-12 |
| Y | CN 113795943 A (NINGDE AMPEREX TECHNOLOGY LTD.) 14 December 2021 (2021-12-14)<br>See paragraphs [0001], [0036] and [0112]-[0120]; and tables 2 and 2-1. | 1-12 |
| Y | KR 10-2021-0042659 A (LG CHEM, LTD.) 20 April 2021 (2021-04-20)<br>See claims 1, 4, 8 and 10; and paragraphs [0036] and [0044]. | 9 |
| A | KR 10-2021-0058172 A (LG CHEM, LTD.) 24 May 2021 (2021-05-24)<br>See entire document. | 1-12 |
| A | KR 10-2020-0109141 A (LG CHEM, LTD.) 22 September 2020 (2020-09-22)<br>See entire document. | 1-12 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2024** | **09 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/020496**

| Patent document cited in search report | | | Publication date (day/month/year) | Patent family member(s) | | | Publication date (day/month/year) |
|---|---|---|---|---|---|---|---|
| KR | 10-2020-0089568 | A | 27 July 2020 | CN | 113692657 | A | 23 November 2021 |
| | | | | EP | 3893295 | A1 | 13 October 2021 |
| | | | | EP | 3893295 | A4 | 16 February 2022 |
| | | | | EP | 3893295 | B1 | 13 March 2024 |
| | | | | KR | 10-2439661 | B1 | 02 September 2022 |
| | | | | US | 2022-0149376 | A1 | 12 May 2022 |
| | | | | WO | 2020-149682 | A1 | 23 July 2020 |
| CN | 113795943 | A | 14 December 2021 | CN | 113795943 | B | 31 March 2023 |
| | | | | JP | 2024-501525 | A | 12 January 2024 |
| | | | | US | 2023-343943 | A1 | 26 October 2023 |
| | | | | WO | 2022-140981 | A1 | 07 July 2022 |
| KR | 10-2021-0042659 | A | 20 April 2021 | None | | | |
| KR | 10-2021-0058172 | A | 24 May 2021 | None | | | |
| KR | 10-2020-0109141 | A | 22 September 2020 | CN | 113632260 | A | 09 November 2021 |
| | | | | EP | 3863084 | A1 | 11 August 2021 |
| | | | | EP | 3863084 | A4 | 01 December 2021 |
| | | | | KR | 10-2564970 | B1 | 09 August 2023 |
| | | | | US | 2022-0013784 | A1 | 13 January 2022 |
| | | | | WO | 2020-185014 | A1 | 17 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220184220
- JP 2009080971 A